# EUROPEAN PATENT APPLICATION

(11) **EP 3 002 847 A1**
(43) Date of publication of application: **06.04.2016**
(21) Application number: 15179611.7
(22) Date of filing: 04.08.2015
(51) Int. Cl.: H02J 3/36

(54) **HIGH VOLTAGE DIRECT CURRENT TRANSMISSION SYSTEM**

(30) Priority: 01.10.2014 KR 20140132200
(71) Applicant: LSIS Co., Ltd., Anyang-si, Gyeonggi-do 431-848 (KR)
(72) Inventor: CHOI, Yong Kil, 431-848 Anyang-si, Gyeonggi-do (KR); CHOI, Ho Seok, 431-848 Anyang-si, Gyeonggi-do (KR)
(74) Representative: Lang, Johannes

(57) **Abstract**

A high voltage direct current (HVDC) transmission system is provided. The high voltage direct current (HVDC) transmission system includes: a first power transceiving part consuming power generated by a power generation part, storing the generated power, and outputting the generated power or stored power to a second power transceiving part; a second power transceiving part consuming power generated by a power generation part, storing the generated power and outputting the generated power or stored power to the first power transceiving part; and a control part controlling the power transmission and reception of the first power transceiving part and the second power transceiving part.

## Description

### BACKGROUND

The present disclosure relates to a high voltage direct current (HVDC) transmission system.

The HVDC transmission system transmits away electricity through an HVDC.

In general, the HVDC transmission system uses an aerial line or submarine cable to transmit electricity.

The HVDC transmission system is being widely utilized due to advantages in that an investment cost is low, there is no limitation in cable length and loss in power transmission may be minimized.

The HVDC transmission system employs a power transmission technique, according to which a transmission site converts alternating current (AC) power generated by a power station into DC power and then transmits the DC power and a reception site re-converts the DC power into the AC power to supply power, so there is a need to efficiently use and distribute generated power.

### SUMMARY

Embodiments provide a high voltage direct current (HVDC) transmission system that enables power generated by a power station to be efficiently used and stored at a transmission site and a reception site.

In one embodiment, a high voltage direct current (HVDC) transmission system includes: a first power transceiving part consuming power generated by a power generation part, storing the generated power, and outputting the generated power or stored power to a second power transceiving part; a second power transceiving part consuming power generated by a power generation part, storing the generated power and outputting the generated power or stored power to the first power transceiving part; and a control part controlling the power transmission and reception of the first power transceiving part and the second power transceiving part.

According to an embodiment, since generated power may be efficiently utilized at a transmission site and shared with a reception site, it is possible to increase the efficiency of usage.

The details of one or more embodiments are set forth in the accompanying drawings and the description below. Other features will be apparent from the description and drawings, and from the claims.

### BRIEF DESCRIPTION OF THE DRAWINGS

Fig. 1 is a diagram for explaining the configuration of a high voltage direct current (HVDC) transmission system according to an embodiment.
Fig. 2 is a diagram for explaining the configuration of a mono-polar HVDC transmission system according to an embodiment.
Fig. 3 is a diagram for explaining the configuration of a bipolar HVDC transmission system according to an embodiment.
Fig. 4 is a diagram for explaining the connection of a transformer and a three-phase valve bridge according to an embodiment.
Fig. 5 is a diagram for explaining the configuration of an HVDC transmission system according to an embodiment.
Fig. 6 is a flowchart for explaining the operation of an HVDC transmission system according to an embodiment.

### DETAILED DESCRIPTION OF THE EMBODIMENTS

Reference will now be made in detail to the embodiments of the present disclosure, examples of which are illustrated in the accompanying drawings.

The terms or words used in the detailed description and claims should not be limitatively construed as typical meanings or meanings indicated in dictionaries but should be construed as meanings and concepts matching the technical spirit of the inventive concept based on the principle that the inventor may properly define the concepts of terms in order to describe his or her invention in the best mode.

Thus, since embodiments described in the detailed description and configurations shown in the drawings are only examples and do not cover all the technical spirits of an embodiment, it should be understood that there may be various equivalents and variations that may replace them upon filing the present application.

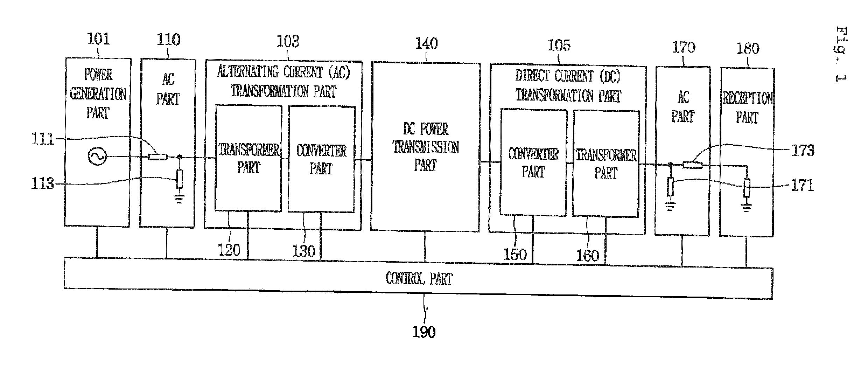

Fig. 1 shows a high voltage direct current (HVDC) transmission system according to an embodiment.

As shown in Fig. 1, an HVDC transmission system 100 according to an embodiment includes a power generation part 101, a transmission-side alternating current (AC) part 110, a transmission-side transformation part 103, a DC power transmission part 140, a reception-side transformation part 105, a reception-side AC part 170, a reception part 180, and a control part 190.

The transmission-side transformation part 103 includes a transmission-side transformer part 120, and a transmission-side AC/DC converter part 130. The reception-side transformation part 105 includes a reception-side AC/DC converter part 150, and a reception-side transformer part 160.

The power generation part 101 generates three-phase AC power. The power generation part 101 may include a plurality of power stations.

The transmission-side AC part 110 transmits the three-phase AC power generated by the power generation part 101 to a DC substation that includes the transmission-side transformer part 120 and the transmission-side AC/DC converter part 130.

The transmission-side transformer part 120 isolates the transmission-side AC part 110 from the transmission-side AC/DC converter part 130 and the DC power transmission part 140.

The transmission-side AC/DC converter part 130 converts, into AC power, three-phase AC power corresponding to the output of the transmission-side transformer part 120.

The DC power transmission part 140 transmits transmission-side DC power to a reception side.

The reception-side DC/AC converter part 150 converts DC power transmitted by the DC power transmission part 140, into three-phase AC power.

The reception-side transformer part 160 isolates the reception-side AC part 170 from the reception-side DC/AC converter part 150 and the DC power transmission part 140.

The reception-side AC part 170 provides, to the reception part 180, three-phase AC power corresponding to the output of the reception-side transformer part 160.

The control part 190 may control the turn-on and turn-off timings of a plurality of valves in the power generation part 101, the transmission-side AC part 110, the transmission-side transformation part 103, the DC power transmission part 140, the reception-side transformation part 105, the reception-side AC part 170, the reception part 180, and the reception-side DC/AC converter part 150. In this case, the valve may correspond to a thyristor or insulated gate bipolar transistor (IGBT).

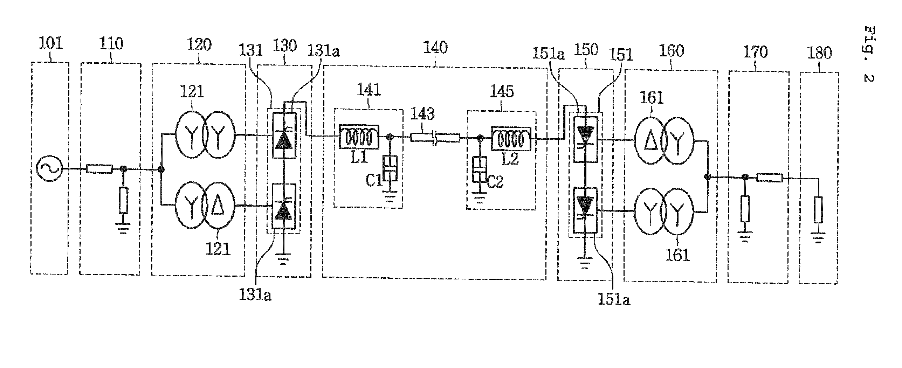

Fig. 2 shows a mono-polar HVDC transmission system according to an embodiment.

Fig. 2 shows a system transmitting single-pole DC power.

Although it is assumed in the following description that the single-pole is a positive pole, there is no need to be limited thereto.

A transmission-side AC part 110 includes an AC power transmission line 111 and an AC filter 113.

The AC power transmission line 111 transmits three-phase AC power generated by a power generation part 101, to a transmission-side transformation part 103.

The AC filter 113 removes other frequency components excluding frequency components used by the transformation part 103, from the transmitted three-phase AC power.

A transmission-side transformer part 120 includes one or more transformers 121 for the positive pole. For the positive pole, a transmission-side AC/DC converter part 130 includes an AC/positive-pole DC converter 131 generating positive-pole DC power, and the AC/positive-pole DC converter 131 includes one or more three-phase valve bridges 131a corresponding to one or more transformers 121, respectively.

When one three-phase valve bridge 131a is used, the AC/positive-pole DC converter 131 may use AC power to generate positive-pole DC power having six pulses. In this case, the primary and secondary coils of one transformer 121 may have a Y-Y connection or Y-Δ connection.

When two three-phase valve bridges 131a are used, the AC/positive-pole DC converter 131 may use AC power to generate positive-pole DC power having twelve pulses. In this case, the primary and secondary coils of one of two transformers 121 may have a Y-Y connection, and the primary and secondary coils of the other of two transformers 121 may have a Y-Δ connection.

When three three-phase valve bridges 131a are used, the AC/positive-pole DC converter 131 may use AC power to generate positive-pole DC power having 18 pulses. The more the number of pulses of the positive-pole DC power, the price of the filter may decrease.

The DC power transmission part 140 includes a transmission-side positive-pole DC filter 141, a positive-pole DC power transmission line 143, and a reception-side positive-pole DC filter 145.

The transmission-side positive-pole DC filter 141 includes an inductor L1 and a capacitor C1 and filters positive-pole DC power output by the AC/positive-pole DC converter 131.

The positive-pole DC power transmission line 143 may have a DC line for transmission of positive-pole DC power, and earth may be used as a current feedback path. One or more switches may be disposed on the DC line.

The reception-side positive-pole DC filter 145 includes an inductor L2 and a capacitor C2 and DC-filters positive-pole DC power transmitted through the positive-pole DC power transmission line 143.

The reception-side DC/AC converter part 150 includes a positive-pole DC/AC converter 151, which includes one or more three-phase valve bridges 151a.

The reception-side transformer part 160 includes one or more transformers 161 corresponding respectively to one or more three-phase valve bridges 151a for the positive pole.

When one three-phase valve bridge 151a is used, the positive-pole DC/AC converter 151 may use positive-pole DC power to generate AC power having six pulses. In this case, the primary and secondary coils of one transformer 161 may have a Y-Y connection or Y-Δ connection.

When two three-phase valve bridges 151a are used, the positive-pole DC/AC converter 151 may use positive-pole DC power to generate AC power having 12 pulses. In this case, the primary and secondary coils of one of two transformers 161 may have a Y-Y connection, and the primary and secondary coils of the other of two transformers 161 may have a Y-Δ connection.

When three three-phase valve bridges 151a are used, the positive-pole DC/AC converter 151 may use positive-pole DC power to generate AC power having 18 pulses. The more the number of pulses of the AC power, the price of the filter may decrease.

A reception-side AC part 170 includes an AC filter 171 and an AC power transmission line 173.

The AC filter 171 removes other frequency components excluding the frequency component (e.g., about 60 Hz) used by the reception part 180, from the AC power generated by the reception-side transformation part 105.

The AC power transmission line 173 transmits filtered AC power to the reception part 180.

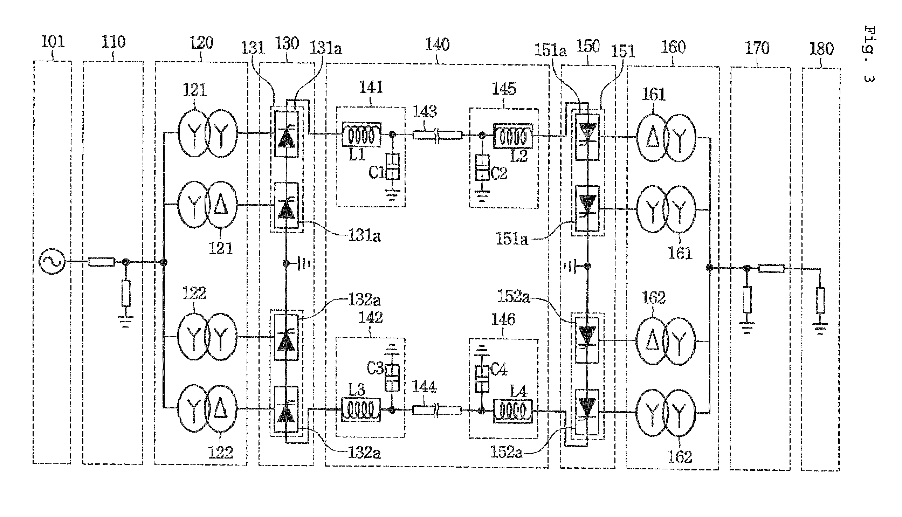

Fig. 3 shows a bipolar HVDC transmission system according to an embodiment.

Fig. 3 shows a system transmitting two-pole DC power. Although it is assumed in the following description that the two poles are a positive pole and a negative pole, there is no need to be limited thereto.

A transmission-side AC part 110 includes an AC power transmission line 111 and an AC filter 113.

The AC power transmission line 111 transmits three-phase AC power generated by a power generation part 101, to a transmission-side transformation part 103.

The AC filter 113 removes other frequency components excluding frequency components used by the transformation part 103, from the transmitted three-phase AC power.

The transmission-side transformer part 120 includes one or more transformers 121 for the positive pole and one or more transformers 122 for the negative pole. A transmission-side AC/DC converter part 130 includes an AC/positive-pole DC converter 131 generating positive-pole DC power and an AC/negative-pole DC converter 132 generating negative-pole DC power, the AC/positive-pole DC converter 131 includes one or more three-phase valve bridges 131a corresponding respectively to one or more transformers 121 for the positive-pole, and the AC/negative-pole DC converter 132 includes one or more three-phase valve bridges 132a corresponding respectively to one or more transformers 122 for the negative-pole.

When one three-phase valve bridge 131a is used for the positive pole, the AC/positive-pole DC converter 131 may use AC power to generate positive-pole DC power having six pulses. In this case, the primary and secondary coils of one transformer 121 may have a Y-Y connection or Y-Δ connection.

When two three-phase valve bridges 131a are used for the positive pole, the AC/positive-pole DC converter 131 may use AC power to generate positive-pole DC power having 12 pulses. In this case, the primary and secondary coils of one of two transformers 121 may have a Y-Y connection, and the primary and secondary coils of the other of two transformers 121 may have a Y-Δ connection.

When three three-phase valve bridges 131a are used for the positive pole, the AC/positive-pole DC converter 131 may use AC power to generate positive-pole DC power having 18 pulses. The more the number of pulses of the positive-pole DC power, the price of the filter may decrease.

When one three-phase valve bridge 132a is used for the negative pole, the AC/negative-pole DC converter 132 may generate negative-pole DC power having six pulses. In this case, the primary and secondary coils of one transformer 122 may have a Y-Y connection or Y-Δ connection.

When two three-phase valve bridges 132a are used for the negative pole, the AC/negative-pole DC converter 132 may generate negative-pole DC power having 12 pulses. In this case, the primary and secondary coils of one of two transformers 122 may have a Y-Y connection, and the primary and secondary coils of the other of two transformers 122 may have a Y-Δ connection.

When three three-phase valve bridges 132a are used for the negative pole, the AC/negative-pole DC converter 132 may generate negative-pole DC power having 18 pulses. The more the number of pulses of the negative-pole DC power, the price of the filter may decrease.

The DC power transmission part 140 includes a transmission-side positive-pole DC filter 141, a transmission-side negative-pole DC filter 142, a positive-pole DC power transmission line 143, a negative-pole DC power transmission line 144, a reception-side positive-pole DC filter 145, and a reception-side negative-pole DC filter 146.

The transmission-side positive-pole DC filter 141 includes an inductor L1 and a capacitor C1 and DC-filters positive-pole DC power output by the AC/positive-pole DC converter 131.

The transmission-side negative-pole DC filter 142 includes an inductor L3 and a capacitor C3 and DC-filters negative-pole DC power output by the AC/negative-pole DC converter 132.

The positive-pole DC power transmission line 143 may have a DC line for transmission of positive-pole DC power, and earth may be used as a current feedback path. One or more switches may be disposed on the DC line.

The negative-pole DC power transmission line 144 may have a DC line for transmission of negative-pole DC power, and earth may be used as a current feedback path. One or more switches may be disposed on the DC line.

The reception-side positive-pole DC filter 145 includes an inductor L2 and a capacitor C2 and DC-filters positive-pole DC power transmitted through the positive-pole DC power transmission line 143.

The reception-side negative-pole DC filter 146 includes an inductor L4 and a capacitor C4 and DC-filters negative-pole DC power transmitted through the negative-pole DC power transmission line 144.

The reception-side DC/AC converter part 150 includes a positive-pole DC/AC converter 151 and a negative-pole DC/AC converter 152, the positive-pole DC/AC converter 151 includes one or more three-phase valve bridges 151a, and the negative-pole DC/AC converter 152 includes one or more three-phase valve bridges 152a.

The reception-side transformer part 160 includes one or more transformers 161 corresponding respectively to one or more three-phase valve bridges 151a for the positive pole and one or more transformers 162 corresponding respectively to one or more three-phase valve bridges 152a for the negative pole.

When one three-phase valve bridge 151a is used for the positive pole, the positive-pole DC/AC converter 151 may use positive-pole DC power to generate AC power having six pulses. In this case, the primary and secondary coils of one transformer 161 may have a Y-Y connection or Y-Δ connection.

When two three-phase valve bridges 151a are used for the positive pole, the positive-pole DC/AC converter 151 may use positive-pole DC power to generate AC power having 12 pulses. In this case, the primary and secondary coils of one of two transformers 161 may have a Y-Y connection, and the primary and secondary coils of the other of two transformers 161 may have a Y-Δ connection.

When three three-phase valve bridges 151a are used for the positive pole, the positive-pole DC/AC converter 151 may use positive-pole DC power to generate AC power having 18 pulses. The more the number of pulses of the AC power, the price of the filter may decrease.

When one three-phase valve bridge 152a is used for the negative pole, the negative-pole DC/AC converter 152 may use negative-pole DC power to generate AC power having six pulses. In this case, the primary and secondary coils of one transformer 162 may have a Y-Y connection or Y-Δ connection.

When two three-phase valve bridges 152a are used for the negative pole, the negative-pole DC/AC converter 152 may use negative-pole DC power to generate AC power having 12 pulses. In this case, the primary and secondary coils of one of two transformers 162 may have a Y-Y connection, and the primary and secondary coils of the other of two transformers 162 may have a Y-Δ connection.

When three three-phase valve bridges 152a are used for the negative pole, the negative-pole DC/AC converter 152 may use negative-pole DC power to generate AC power having 18 pulses. The more the number of pulses of the AC power, the price of the filter may decrease.

A reception-side AC part 170 includes an AC filter 171 and an AC power transmission line 173.

The AC filter 171 removes other frequency components excluding the frequency component (e.g., about 60 Hz) used by the reception part 180, from the AC power generated by the reception-side transformation part 105.

The AC power transmission line 173 transmits filtered AC power to the reception part 180.

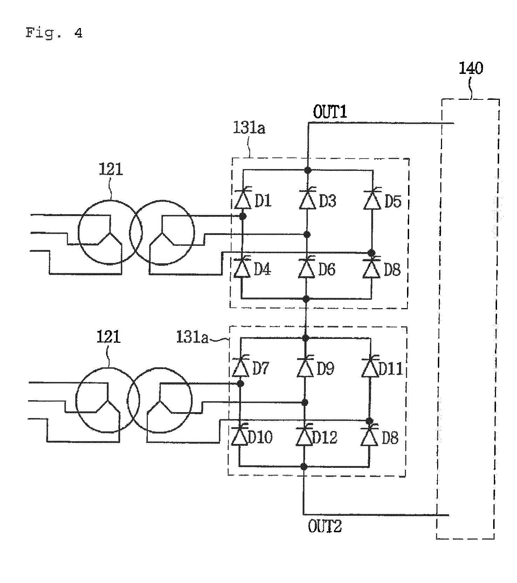

Fig. 4 shows the connection of a three-phase valve bridge and a transformer according to an embodiment.

In particular, Fig. 4 shows the connection of two transformers 121 for a positive pole and two three-phase valve bridges 131a for the positive pole. Since the connection of two transformers 122 for a negative pole and two three-phase valve bridges 132a for the negative pole, the connection of two transformers 161 for the positive pole and two three-phase valve bridges 151a for the positive pole, the connection of two transformers 162 for the negative pole and two three-phase valve bridges 152a for the negative pole, the connection of a transformer 121 for the positive pole and a three-phase valve bridge 131a for the positive pole, the connection of a transformer 161 for the positive pole and a three-phase valve bridge 151a for the positive pole and so on may be easily driven from the embodiment in Fig. 4, their drawings and descriptions are omitted.

In Fig. 4, the transformer 121 having a Y-Y connection is referred to as an upper transformer, the transformer 121 having a Y-Δ connection is referred to as a lower transformer, the three-phase valve bridge 131a connected to the upper transformer is referred to as an upper three-phase valve bridge, and the three-phase valve bridge 131a connected to the lower transformer is referred to as a lower three-phase valve bridge.

The upper three-phase valve bridge and the lower three-phase valve bridge have a first output OUT1 and a second output OUT2 that are two outputs outputting DC power.

The upper three-phase valve bridge includes six valves D1 to D6 and the lower three-phase valve bridge includes six valves D7 to D12.

The valve D1 has a cathode connected to the first output OUT1 and an anode connected to the first terminal of the secondary coil of the upper transformer.

The valve D2 has a cathode connected to the anode of the valve D5 and an anode connected to the anode of the valve D6.

The valve D3 has a cathode connected to the first output OUT1 and an anode connected to the second terminal of the secondary coil of the upper transformer.

The valve D4 has a cathode connected to the anode of the valve D1 and an anode connected to the anode of the valve D6.

The valve D5 has a cathode connected to the first output OUT1 and an anode connected to the third terminal of the secondary coil of the upper transformer.

The valve D6 has a cathode connected to the anode of the valve D3.

The valve D7 has a cathode connected to the anode of the valve D6 and an anode connected to the first terminal of the secondary coil of the lower transformer.

The valve D8 has a cathode connected to the anode of the valve D11 and an anode connected to the anode of the second output OUT2.

The valve D9 has a cathode connected to the anode of the valve D6 and an anode connected to the second terminal of the secondary coil of the lower transformer.

The valve D10 has a cathode connected to the anode of the valve D7 and an anode connected to the second output OUT2.

The valve D11 has a cathode connected to the anode of the valve D6 and an anode connected to the third terminal of the secondary coil of the lower transformer.

The valve D12 has a cathode connected to the anode of the valve D9 and an anode connected to the second output OUT2.

The reception-side DC/AC converter part 150 may include a modular multi-level converter 200.

The modular multi-level converter 200 may use a plurality of sub modules 210 to convert DC power into AC power.

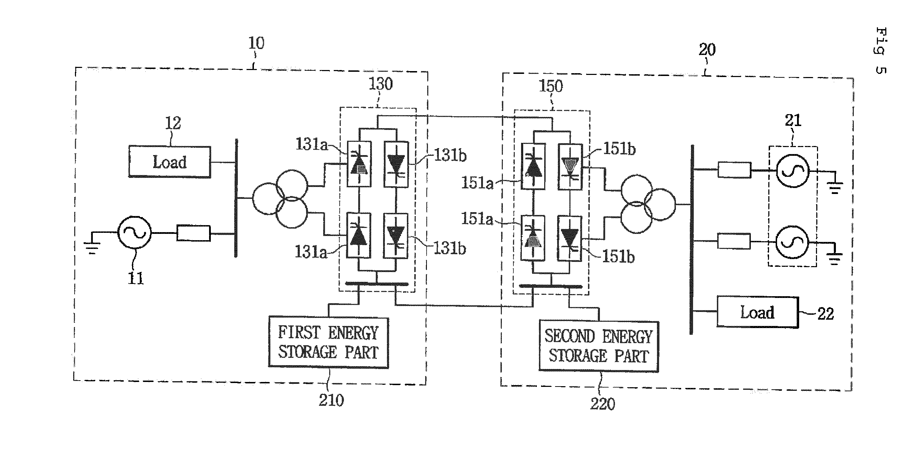

Fig. 5 is a diagram for explaining the configuration of an HVDC transmission system according to an embodiment.

The HVDC transmission system according to an embodiment has a structure in which a power transceiving part including both a transmission side and a reception side is connected in plurality. That is, the HVDC transmission system may have a structure in which a first power transceiving part 10 and a second power transceiving part 20 that include a power generation part and a reception part are connected.

Although as shown in Fig. 5, the embodiment defines a left power transceiving part as the first power transceiving part 10 and a right power transceiving part as the second power transceiving part 20, the connection and arrangement of the first and second power transceiving parts 10 and 20 have no limitations and may vary according to an embodiment.

In the following, the configuration of the HVDC transmission system according to the embodiment is described in detail with reference to Fig. 5.

A first AC/DC converter part 130 in the first power transceiving part 10 includes an AC/positive-pole DC converter 131 generating positive-pole DC power and the AC/positive-pole DC converter 131 includes dual three-phase valve bridges 131a and 131b corresponding to transformers 121.

Specifically, the first converter part 130 may convert AC power generated by a first power generation part 11into DC power, and DC power applied from a second converter part 150 into AC power. Also, the first converter part 130 may output the AC power generated by the first power generation part 11 to a first reception part 12 and a first energy storage part 210 or to the second power transceiving part 20.

Also, the second converter part 150 may also include dual three-phase valve bridges 151a and 151b for the positive pole.

Specifically, the second converter part 150 in the second power transceiving part 20 may convert AC power generated by a second power generation part 11into DC power, and DC power applied from the first converter part 130 into AC power. Also, the second converter part 150 may output the AC power generated by the second power generation part 21 to a second reception part 22 and a second energy storage part 220 or to the first power transceiving part 10.

The energy storage parts 210 and 220 may be connected respectively to the first converter part 130 and the second converter part 150. In the embodiment, the energy storage part connected to the first converter part 130 is described as the first energy storage part 210 and the energy storage part connected to the second converter part 150 is described as the second energy storage part 220, for example.

The first energy storage part 210 and the second energy storage part 220 may store power generated by the first and second power generation parts 11 and 21 respectively or mutually.

The control part 190 may calculate power to be consumed by the first reception part 12 with respect to power generated by the first power generation part 11 and check the power consumption and the generated power so that surplus power may be stored in the first energy storage part 210. Also, the control part 190 may check power to be supplied to the second reception part 22 with respect to the power stored in the first energy storage part 210 and output corresponding power to the second energy storage part 220. The control part 190 may store power excluding that supplied to the second reception part 22 in the second converter part 150 to the second energy storage part 220 and transmit it to the first converter part 130. That is, the first and second energy storage parts 210 and 220 may check power generated by the first and second power generation parts 11 and 21 connected respectively thereto and consumed by the first and second reception parts 12 and 22 and store surplus power. Also, stored power may be transmitted to a transmission side or reception side under the control of the control part 190.

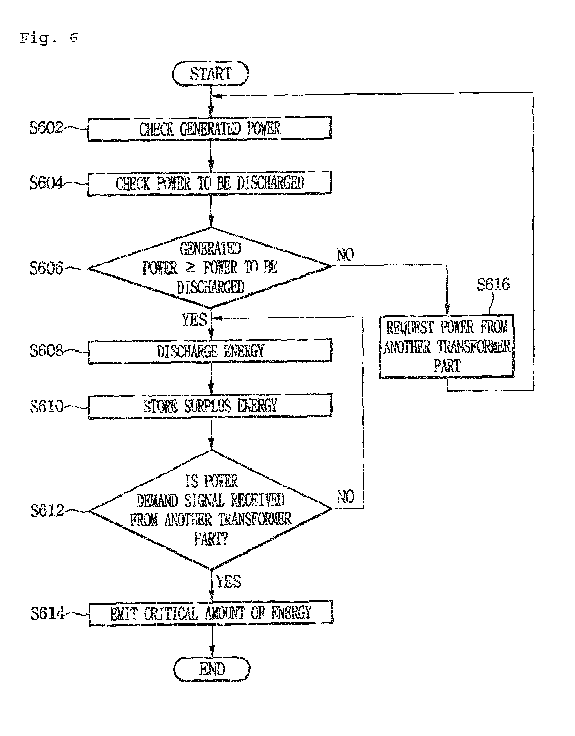

In the following, the operation of the HVDC transmission system according to an embodiment is described in detail with reference to Fig. 6.

Fig. 6 is a flowchart for explaining the operation of an HVDC transmission system according to an embodiment.

Referring to Fig. 6, a control part 190 according to an embodiment may check the power generated by a first power generation part 11 in step S602.

The control part 190 may check the generated power and check power to be discharged by a first reception part 12 and power to be transmitted to a second power transceiving part 20 in step S604.

When the power to be discharged by the first reception part 12 is less than or equal to the generated power, the control part 190 may store power corresponding to the difference in an energy storage part. The energy storage part may be a first storage part 210 connected to a first converter part 130.

The control part 190 may check whether a power demand signal is received from the other side, i.e., a second converter part 150 in a second power transceiving part 20. That is, the control part 190 may check whether power pre-transmitted from the second power transceiving part 20 or pre-stored has been discharged.

The control part 190 may check power demanded from the second power transceiving part 20 and transmit energy stored in the first energy storage part 210 to the second power transceiving part 20, in step S614.

On the contrary, if the generated power is less than charged power, the control part 190 may request energy stored in a second energy storage part 220 connected to a second transformer part 150 of the second power transceiving part 20 and store corresponding energy in the first energy storage part 210, in step 616. That is, the power pre-transmitted to the second power transceiving part 20 may be received and used as power for a first power transceiving part 10. In this case, the control part 190 may enable surplus power excluding the power consumption of the first power transceiving part 10 to be re-transmitted.

Also, the control part 190 may enable power generation, reception and transmission to the second power transceiving part 20 performed by the first power transceiving part 10 to be performed by the second power transceiving part 20. That is, since the converter part of each of the first and second power transceiving parts 10 and 20 includes dual three-phase valve bridges and the first and second power transceiving parts include the power generation parts 11 and 21 respectively and the reception parts 12 and 22 respectively, bidirectional power transmission and reception are possible.

Also, if a trouble is sensed in transmission and reception operations of the HVDC transmission system, the control part 190 may output power generated or stored by each of the first and second power transceiving parts 10 and 20 to perform self-discharging (consumption).

Exemplary embodiments are mainly described above. However, they are only examples and do not limit the inventive concept. A person skilled in the art may appreciate that many variations and applications not presented above may be implemented without departing from the essential characteristic of embodiments. For example, each component specifically represented in embodiments may vary. In addition, it should be construed that differences related to such a variation and such an application are included in the scope of the inventive concept defined in the following claims.

## Claims

1. A high voltage direct current (HVDC) transmission system comprising:
a first power transceiving part (10) consuming power generated by a power generation part, storing the generated power, and outputting the generated power or stored power to a second power transceiving part;
a second power transceiving part (20) consuming power generated by a power generation part, storing the generated power and outputting the generated power or stored power to the first power transceiving part; and
a control part (190) controlling the power transmission and reception of the first power transceiving part (10) and the second power transceiving part (20).

2. The high voltage direct current (HVDC) transmission system according to claim 1, wherein the first power transceiving part (10) consumes or stores power applied from the second power transceiving part (20).

3. The high voltage direct current (HVDC) transmission system according to claim 2, wherein the first power transceiving part (10} comprises:
a first power generation part (11);
a first reception part (12) consuming the power generated by the first power generation part (11);
a first converter part (130) converting alternating current (AC) power generated by the first power generation part (11} into DC power; and
a first storage part (210) storing the power generated by the first power generation part (11), and
the first converter part (130) comprises dual three-phase valve bridges.

4. The high voltage direct current (HVDC) transmission system according to claim 3, wherein the first converter part (130) converts DC power applied from the second power transceiving part (20) into AC power.

5. The high voltage direct current (HVDC) transmission system according to claim 3, wherein the first storage part (210) stores power applied from the second power transceiving part (20).

6. The high voltage direct current (HVDC) transmission system according to claim 5, wherein the first storage unit (210) stores surplus power remaining after the consumption by a first reception part (12) among the power generated by the first power generation part (11) and the power applied from the second power transceiving part (20).

7. The high voltage direct current (HVDC) transmission system according to claim 1, wherein the second power transceiving part (20) consumes or stores power applied from the first power transceiving part (10).

8. The high voltage direct current (HVDC) transmission system according to claim 2, wherein the second power transceiving part (20) comprises:
a second power generation part (21);
a second reception part (22) consuming power generated by the second power generation part;
a second converter part (150) converting AC power generated by the second power generation part into DC power; and
a second storage part (220) storing the power generated by the second power generation part (21), and
the second converter part (150) comprises dual three-phase valve bridges.

9. The high voltage direct current (HVDC) transmission system according to claim 8, wherein the second converter part (150) converts DC power applied from the first power transceiving part (10) into AC power.

10. The high voltage direct current (HVDC) transmission system according to claim 8, wherein the second storage part (220) stores power applied from the first power transceiving part (10).

11. The high voltage direct current (HVDC) transmission system according to claim 10, wherein the second storage unit (220) stores surplus power remaining after the consumption by a second reception part among the power generated by the second power generation part (21) and the power applied from the first power transceiving part (10).
